Europäisches Patentamt

European Patent Office

Office européen des brevets

(11) Publication number: 0 153 839
A2

# EUROPEAN PATENT APPLICATION

(21) Application number: 85301054.4

(22) Date of filing: 18.02.85

(51) Int. Cl.⁴: **E 04 C 1/39**
**E 04 C 1/24**

(30) Priority: 21.02.84 GB 8404464

(43) Date of publication of application:
04.09.85 Bulletin 85/36

(84) Designated Contracting States:
AT BE CH DE FR IT LI LU NL SE

(71) Applicant: H.H. Robertson (U.K.) Limited
Cromwell Road Ellesmere Port
South Wirral Cheshire L65 4DS(GB)

(72) Inventor: Payne, Harold James William
The Old Rectory
Handley Chester CH3 9DZ(GB)

(74) Representative: Dodd, David Michael et al,
ROYSTONS 531 Tower Building Water Street
Liverpool L3 1BA(GB)

(54) Panels, particularly for flooring.

(57) A structural floor panel (10) of troughed section has a bottom facing part or parts (14) with preformation (22) affording accommodation and retention sites for hangers (40). Alternatively, the bottom facing part or parts can be separate from the troughed panel but secured or securable thereto across a downwardly open channel.

FIG. 1

Croydon Printing Company Ltd.

Title: Panels, particularly for flooring

DESCRIPTION

The invention relates to panels, particularly for flooring.

It is commonplace for concrete floors above ground level to be supported by incorporated structural panels, usually of steel formed to profiles of a generally corrugated shape, i.e. relative upstands or crests at spacings then constituting troughs. Nowadays, such panels are referred to as "troughed" which term will be used herein. The crests of the troughed panels save on concrete without undue sacrifice of strength and can also serve to afford passageways for services, such as electrical wiring. The bases of the troughs and/or the "interiors" of the crests are difficult sites for attachment of hangers as are frequently required, for example in fixing suspended ceilings. Thus, it can be difficult, and time-consuming, to drill the panels for such attachment of hangers, especially if required to be done after concrete is poured on and has set. The crests are also frequently formed with localised protrusions and/or indentations that aid keying of concrete poured onto the panels. Such local formations can cause problems arising from storage and transportation of similar panels in generally nesting relation, when the local formations of superposed panels can bind and mutually interfere so as to render separation difficult.

It is an object of this invention to provide a panel that actually facilitates fixing of hangers and, at least in some preferred embodiments, further does not suffer from the aforementioned stacking problems.

To that end, according to this invention there is provided a troughed panel that has, or has associated therewith, a bottom-facing part or parts preformed to present hanger accommodation and retention sites. Such preformation may comprise deflection of material of said panel, or a separate part secured or securable thereto, to provide side-recessing affording hanger accommodation and retention when engaged by edge portions of the hanger.

It will be evident that preformation with any degree of deflection of the panel material can, at stacking superposition of panels, enforce spacing of immediately superposed panels and then assist the avoidance of mutually binding engagement of the aforesaid localised protrusions or depressions provided to aid concrete-keying.

Preferred preformations extend longitudinally of the troughed panel, i.e. parallel with crests and troughs of the panel, and may take the form of deflections of material out of but more usually into the base of at least some of the troughs, and are typically of a generally dove-tail section. Dovetail preformations in troughed panels themselves is of particular value in enabling ready meeting of requirements for compression flange stiffening according to European codes of practice and relevant British standards. Hanger preformations in crests of troughed panels would, of course, require longer hangers. In any event, preferred preformations are within the normal crest-top to trough-bottom height of the troughed panel and to an extent substantially less than half that height.

In general, it will be appreciated that lengthwise deflection-type preformations need only present a deflected surface part of greater width than the separation between edges or corners leading thereto in order to force greater spacing than hitherto for immediately superposed nesting panels.

Having concentrated on implementations of this invention relative to trough bottoms of structural panels themselves, it is, of course, appreciated that troughed structural panels often have facing sheets affixed to their bottoms, i.e. extending across and closing downwardly open channels corresponding to the interiors of the crests. That is particularly common where services are run in such crest interiors, as in the so-called "electrical floors". In such cases, the hanger-attachment preformations hereof may be formed entirely in such facing sheets where they close off crest interiors. The loss of the aformentioned stacking spacings for the structural panels as such is at least partially offset by the fact that deflection is then more easily and economically done relative to a lighter grade of sheet material. In any event, electrical floors are most usually prefabricated with bottom closure sheets secured at the factory and often further extending over at least one adjacent downwardly open channel.

Suitable hangers are preferably of two-part construction, each part of generally L-shape and their stems brought and secured together with their free limbs trapped by said preformations. Bolts may be used in registering holes in order to bring and secure together those stems, say with hinging about corners of the parts or embossments of their stems. Overall, the hangers may be of Y-shape or, and preferably, of T-shape, and their parts may be of channel construction. Further registering holes in the stems of the hanger parts may serve for hanging purposes.

Specific implementation of this invention will now be described, by way of example, with reference-to the accompanying drawings, in which:

Figure 1 is a simple profile of a structural panel with hangers in place;

Figure 2 is a more detailed panel profile;

Figure 3 is a detail of an emplaced hanger;

Figure 4 is a perspective view of a hanger;

Figure 5 is a profile for a bottom-faced structural panel of an electrical floor;

Figure 6 is a perspective view of what is shown in Figure 5;

Figure 7 shows another hanger, installed;  and

Figures 8, 9 and 10 are end side and top view of the hanger of Figure 7.

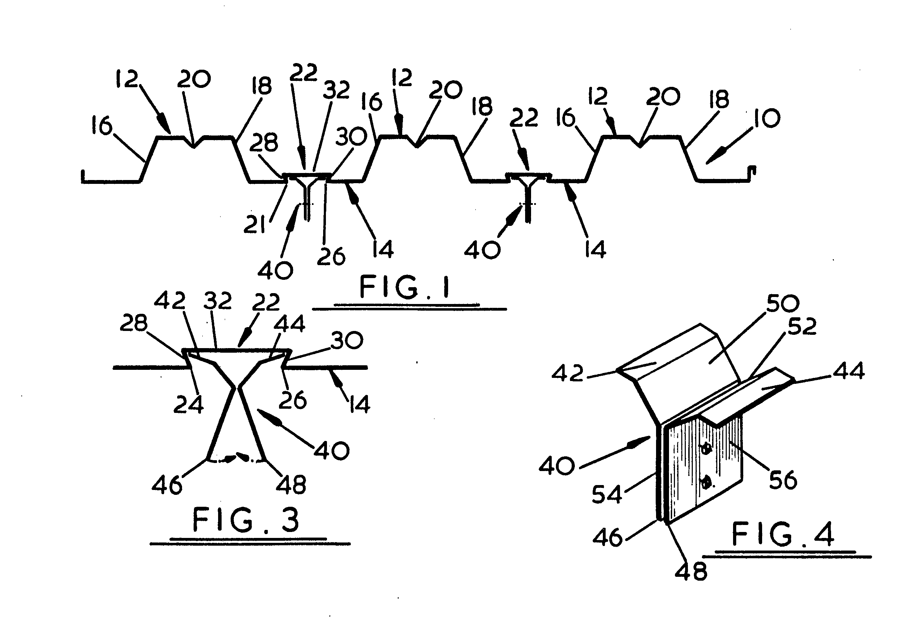

In Figures 1 to 4 a troughed structural panel 10 has lengthwise crests 12 spaced by troughs 14 with sloping transitions 16, 18.  Essentially, the crests 12 and troughs 14 have parallel flat tops and bottoms, respectively, that conform to building engineering requirements.

Our well-established V-slots are shown at 20 in tops of the crests, and the bottom of the troughs 14 are shown with hanger attachment and retention preformations 22 hereof.

As shown, those preformations 22 are in the nature of dovetail section deflections indented in the same direction as, but to a much lesser height than, the crests 12. From edges or corners 24, 26 in the trough bottoms, short divergent side parts 28, 30 extend to a part 32 of greater width than the spacing between the edges or corners 24, 26.

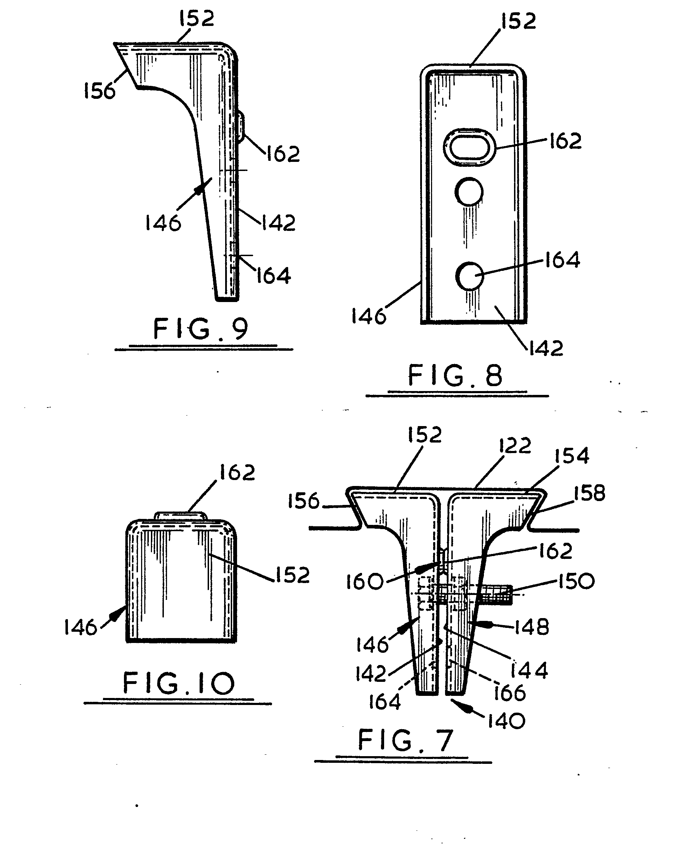

The side parts 28, 30 serve to support hangers in a captive manner. Hangers 40 are shown in Figures 1 to 4 as being of a generally two-part Y-shape with their upper edges bent further outwards at 42, 44 to aid engagement closely under the flat indentation part 32. Other and preferred hangers of generally T-shape will be described in connection with Figures 7 to 10.

A convenient construction for the hangers 40 is as two matching leaves 46, 48 (see Figures 3 and 4) each presenting bifurcations of the Y-shape at 50, 52 and parts juxtaposed at 54, 56 to form the stem of the Y-shape and secured together thereat in any practicable way, for example snap-fitting, rivetting, screwing, clamping or latching. At least rivetting offers the possibility of the leaves 46, 48 being identical. Moreover, securement together of the stem parts 54, 56 on site, and use of resilient material for the leaves 46, 48 permits of advantageous compressive interference fitting into the indentations 22 after the manner clearly indicated in Figure 3 where the stem parts are brought together only after entry of ends 42, 44 into the indent 22, effectively by stressing those stem parts together from contact at the node of the Y-shape.

The other and preferred hanger as shown in Figures 7 to 10 is of generally T-shape, again comprised of two matching leaves 146, 148, this time of generally L-shaped channel formation with a bolt 150 shown in registering holes to bring their longer limbs 142, 144 or stems together back-to-back when tightened. Other limbs 152, 154 have their free ends 156, 158 chamfered to fit to the dove-tail preformation 122. Registering embossments 160, 162 protruding from backs of the stems 142, 144 afford pivotting contact representing an alternative to the node contact referred to for the hanger 40, and also assuring both a clamping interference action in the slot 122 and capability of supply in a loosely assembled state. Further registering holes 164, 166 enable hanging from the hangers 140.

Figure 2 shows a panel profile identical to that of Figure 1 save for the additional presence of both localised protrusions 60 and localised depressions 62 in the sides of the crests in generally known manner for enhanced keying of concrete poured onto the panel. In addition, it is convenient to point to our own particular panel interlocation, side-to-side, via short upstands 64 at one side edge and returned seatings 66 therefor at the other side edge, thereby facilitating adequate sealing prior to concrete pouring.

At least for existing basic profiles of structural panels, it is, as indicated hereinbefore, preferred to make generally dove-tail indentations in trough bottoms, i.e. deflected in the same direction as crests but to a much lesser extent. The reason, of course, is that existing panels have profiles whose maximum height dimension is already matched to building engineering requirements.

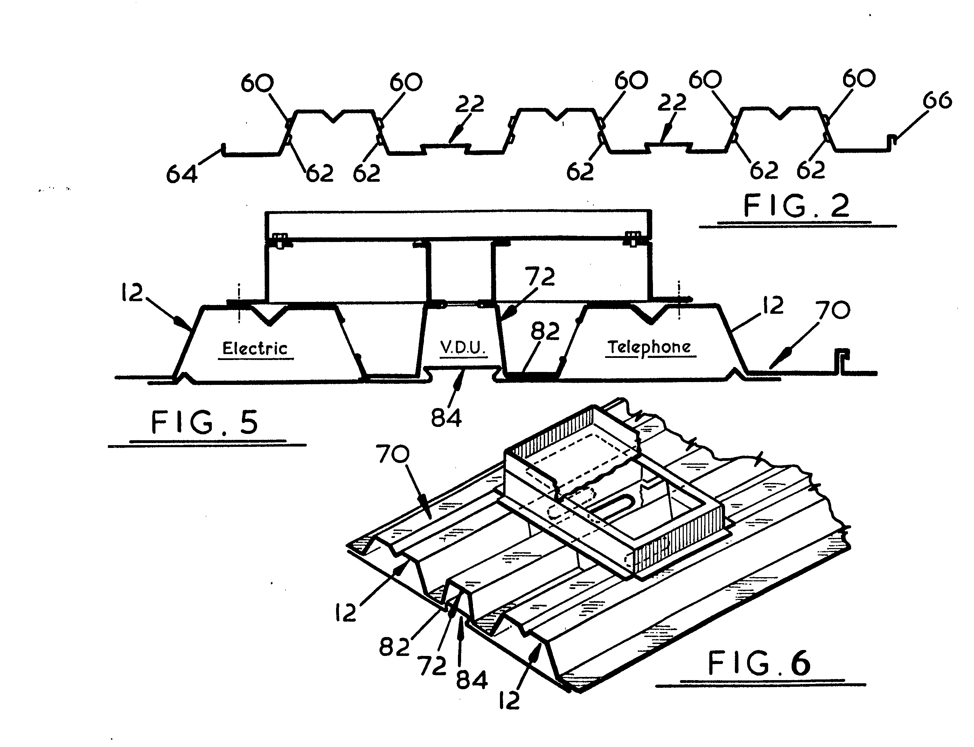

Turning to the Figures 5 and 6 of the drawings, panel 70 has a profile sharing many features with Figures 1 and 2 but omitting the trough base indentations 22 and having one special crest-like formation 72 specifically for the purpose of housing a service or services. In fact, Figures 5 and 6 show an electrical floor with segregation of certain electrical services, in this case light/power,
computer/vdu, and telephone.   The segregation is actually
done using the crest 72 and the two normal flanking crests
12.

That crest formation 72 is shown with a customary
closure plate 82 for which we show an indented lengthwise
preformation 84 entirely similar to those referenced 22
in previous Figures and for the same purpose.

It is to be appreciated that, the closure plate 82
is shown across the other crests 22 flanking the crest
72 and similar formations 84 could be formed thereunder.
It may be that, in some cases, trough bottom formations 22
of Figures 1 and 2 could be provided in combination with
formations such as 84, say where plates 82 where of
relatively narrow width and extent.

Figures 5 and 6 further show aperturing of sides of
the crests 12 and of the top of the crest 72 for access
at desired positions shown defined by a partitioned base
unit 90 further associated with a protective capping tray 92
usually to be covered by a board flush with the top of
the concrete floor.

There is actually no reason other than preference
in relation to our normal bend-forming methods for the
preformations hereof to be of straight-sided, fairly

- 10 -

sharp-angled form. All-or part-curved formations would be equally effective in practice, and may well suit other manufacturing methods for profiled panels.

CLAIMS

1. A structural floor panel of troughed section having a bottom facing part or parts with preformation affording hanger accommodation and retention sites.

2. A structural floor panel according to claim 1, wherein said part or parts are separate from the troughed panel but secured or securable thereto across a downwardly open channel of the troughed panel.

3. A structural floor panel according to claim 2, wherein the separate part or parts serves or serve to close off at least one other adjacent downwardly open channel.

4. A structural floor panel according to any preceding claim, wherein said preformation comprises deflection of material of said panel or separate part or parts which deflection has side recessing affording said accommodation and retention when engaged by edge portions of a said hanger.

5. A structural floor panel according to claim 4, wherein said deflection is into the overall height of the troughed panel, i.e. between tops and bottoms of crests and troughs, and to substantially less than one half of that height.

6. A structural floor panel according to claim 5, wherein said deflection is longitudinal of the troughed panel parallel to its crests and troughs.

7. A structural floor panel according to claim 6, wherein said deflection is present throughout the length of the troughed panel.

8. A structural floor panel according to claim 6 or claim 7, wherein said deflection is of dovetail section.

9. A structural floor panel according to any preceding claim, in combination with hangers each having parts brought and secured together for retention in said sites.

10. A structural floor panel in combination with hangers according to claim 9, wherein each hanger has two generally L-shaped parts whose stems are brought and secured together back-to-back with their free other limbs trapped by said preformations.

FIG. I

FIG. 3

FIG. 4

0153839

60    60         22    60   60   22   60    60    66

64         62    62            62           62    62

FIG. 2

12

Electric          V.D.U.    82    Telephone    12    70

72

84

FIG. 5

70

12

82    72    84    12

FIG. 6

0153839

3/3

FIG. 9

FIG. 8

FIG. 10

FIG. 7